(19) **Europäisches Patentamt / European Patent Office / Office européen des brevets**

(11) **EP 4 580 172 A1**

(12) **EUROPEAN PATENT APPLICATION**

(43) Date of publication:
**02.07.2025 Bulletin 2025/27**

(21) Application number: **24220421.2**

(22) Date of filing: **17.12.2024**

(51) International Patent Classification (IPC):
***H04N 1/60*** *(2006.01)*

(52) Cooperative Patent Classification (CPC):
**H04N 1/6072; H04N 1/6063**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.12.2023 JP 2023223265**
**25.10.2024 JP 2024188547**

(71) Applicant: **CANON KABUSHIKI KAISHA**
**Tokyo 146-8501 (JP)**

(72) Inventors:
• **MIYAZAKI, Shinichi**
  Tokyo (JP)
• **ISHIKAWA, Hisashi**
  Tokyo (JP)
• **YAMADA, Akitoshi**
  Tokyo (JP)
• **MATSUI, Fumino**
  Tokyo (JP)
• **OBAYASHI, Masaaki**
  Tokyo (JP)

(74) Representative: **WESER & Kollegen**
**Patentanwälte PartmbB**
**Radeckestraße 43**
**81245 München (DE)**

(54) **INFORMATION PROCESSING APPARATUS, METHOD, PROGRAM, AND STORAGE MEDIUM FOR STORING PROGRAM**

(57) An image processing apparatus (101) sets, in an image representing inputted image data, a first region, which is used to set a color conversion method for image data, and a second region, which is not used to set the color conversion method; as a result of the setting, in a case where the first region and the second region are included in the image, sets the color conversion method based on image data of the set first region; determines the color conversion method set as a color conversion method to be applied to a region including a portion of at least the first region and the second region in the image, and generates image data after color conversion using the determined color conversion method.

**F I G. 3**

START

OBTAIN ORIGINAL DATA — S101

DIVIDE ORIGINAL DATA INTO PIECES OF PARTIAL ORIGINAL DATA — S102

COLOR CONVERSION OF PARTIAL ORIGINAL DATA — S103

COLOR CONVERSION OF ALL PIECES OF PARTIAL ORIGINAL DATA COMPLETED? — S104
NO / YES

PRINT ORIGINAL DATA — S105

END

EP 4 580 172 A1

**Description**

BACKGROUND OF THE INVENTION

Field of the Invention

The present invention relates to an image processing apparatus capable of executing gamut mapping, a method, a program, and a storage medium for storing a program.

Description of the Related Art

Printers that receive a digital original described in a predetermined color space, map each color in that color space to a color gamut that can be reproduced by that printer, and output the result are known. For example, a method of identifying objects in an original and performing "colorimetric" mapping in graphics regions and "perceptual" mapping in photo regions is known. However, it is very difficult to identify objects, and in particular, when a plurality of objects overlap, their regions are merged, and mapping that matches the merged object is selected.

Japanese Patent Laid-Open No. 2023-60805 discloses analyzing original data to be printed and dividing the original data into a plurality of pieces of partial original data, and then, for each piece of partial original data, setting a method of mapping colors (method of converting colors) to a print color reproduction gamut for that partial original, based on pixel values included in that partial original and a color reproduction gamut (color gamut) at the time of printing, and performing color conversion.

When a region for setting a color conversion method matches a region for applying the set color conversion method, the color conversion method may be set taking into account unnecessary colors, and as a result, an appropriate color conversion result may not be obtained. Therefore, further contrivance should take place for setting of a color conversion method and application of the set color conversion method to image data.

SUMMARY OF THE INVENTION

The present invention provides an image processing apparatus for appropriately executing setting of a color conversion method and application of the set color conversion method to image data, a method, a program, and a program.

The present invention in its first aspect provides an image processing apparatus as specified in claims 1 to 19.

The present invention in its second aspect provides a method as specified in claim 20.

The present invention in its third aspect provides a program as specified in claim 21.

The present invention in its fourth aspect provides a non-transitory computer-readable storage medium as specified in claim 22.

According to the present invention, it is possible to appropriately execute setting of a color conversion method and application of the set color conversion method to image data.

Further features of the present invention will become apparent from the following description of exemplary embodiments with reference to the attached drawings.

BRIEF DESCRIPTION OF THE DRAWINGS

FIG. 1 is a block diagram illustrating a configuration of an image processing apparatus.

FIG. 2 is a diagram illustrating a configuration around a print head.

FIG. 3 is a flowchart for explaining processing for printing original data.

FIGs. 4A and 4B are diagrams for explaining partial image data.

FIG. 5 is a flowchart for explaining color conversion processing.

FIGs. 6A and 6B are diagrams illustrating image data.

FIGs. 7A to 7C are diagrams for explaining color degradation correction.

FIGs. 8A and 8B are diagrams for explaining processing for setting a region.

FIGs. 9A and 9B are diagrams for explaining a first region and a second region.

FIG. 10 is a flowchart for explaining processing for creating a color conversion table.

FIG. 11 is a diagram illustrating image data.

FIG. 12 is a flowchart for explaining color conversion processing.

FIGs. 13A and 13B are diagrams for explaining first to fourth regions.

FIG. 14 is a diagram illustrating a UI screen.

DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made an invention that requires all such features, and multiple such features may be combined as appropriate. Furthermore, in the attached drawings, the same reference numerals are given to the same or similar configurations, and redundant description thereof is omitted.

[First Embodiment]

The terms to be used in the present embodiment will be defined in advance as follows.

(Color Reproduction Gamut)

A color reproduction gamut refers to a range of colors that can be reproduced in an arbitrary color space, and is also referred to as a color reproduction range, a color gamut, or a gamut. Further, a color gamut volume is an index for expressing the size of the color reproduction gamut. A color gamut volume is a three-dimensional volume in an arbitrary color space. In some cases, chromaticity points constituting a color reproduction gamut are discrete. For example, in some cases, a particular color reproduction gamut is represented using 729 points in CIE-L*a*b* and points therebetween are obtained using a known interpolation operation, such as tetrahedral interpolation or cubic interpolation. In such cases, a sum of calculated volumes (in CIE-L*a*b*) of tetrahedrons, cubes, or the like constituting the color reproduction gamut and corresponding to the interpolation calculation method can be used for a corresponding color gamut volume. The color reproduction gamut and the color gamut according to the present embodiment are not limited to those of a particular color space, but in the present embodiment, description will be given using the color reproduction gamut in the CIE-L*a*b* space as an example. Similarly, a numerical value of the color reproduction gamut according to the present embodiment indicates a volume for when cumulative calculation is performed in the CIE-L*a*b* space based on tetrahedral interpolation.

(Gamut Mapping)

Gamut mapping is processing for converting colors between different color gamuts, such as mapping an input color gamut to an output color gamut. Conversion within the same color gamut is not referred to as gamut mapping. International Color Consortium (ICC) profiles such as perceptual, saturation, colorimetric, and the like are typical. In the mapping processing, conversion may be performed, for example, using a single three-dimensional (3D) lookup table (LUT). The mapping processing may also be performed after color space conversion into a standard color space. For example, when an input color space is sRGB, conversion into the CIE-L*a*b* color space is performed. Processing for mapping to an output color gamut is performed in the CIE-L*a*b* color space. The mapping processing may be 3D LUT processing, or a conversion formula may be used. Further, conversion from a color space at the time of input to a color space at the time of output may be performed simultaneously. For example, a configuration may be taken such that at the time of input, the color space is sRGB, and at the time of output, conversion into RGB values or CMYK values unique to a printing apparatus is performed.

(Color Degradation)

In the present embodiment, a post-mapping distance between colors in a predetermined color space becoming smaller than a pre-mapping distance between colors when gamut mapping is performed for any two colors will be defined as color degradation. Specifically, it is assumed that there are a color A and a color B in a digital original, and by being mapped to a color gamut of a printer, the color A has been converted to a color C and the color B has been converted to a color D. A state in which, in that case, a distance between the color C and the color D is smaller than a distance between the color A and the color B is defined as color degradation. When color degradation occurs, what had been recognized to be different colors in a digital original will be recognized to be the same color when an image is printed. For example, in a graph, by making different items be different colors, they will be recognized as different items. There is a possibility that different items of the graph will be misrecognized to be the same item due to the different colors being recognized to be the same color due to color degradation. A predetermined color space for calculating a distance between colors here may be an arbitrary color space, such as the sRGB color space, an Adobe RGB color space, the CIE-L*a*b* color space, a CIE-LUV color space, an XYZ color system color space, an xyY color system color space, an HSV color space, an HLS color space, or the like.

<Image Processing Apparatus as a Whole>

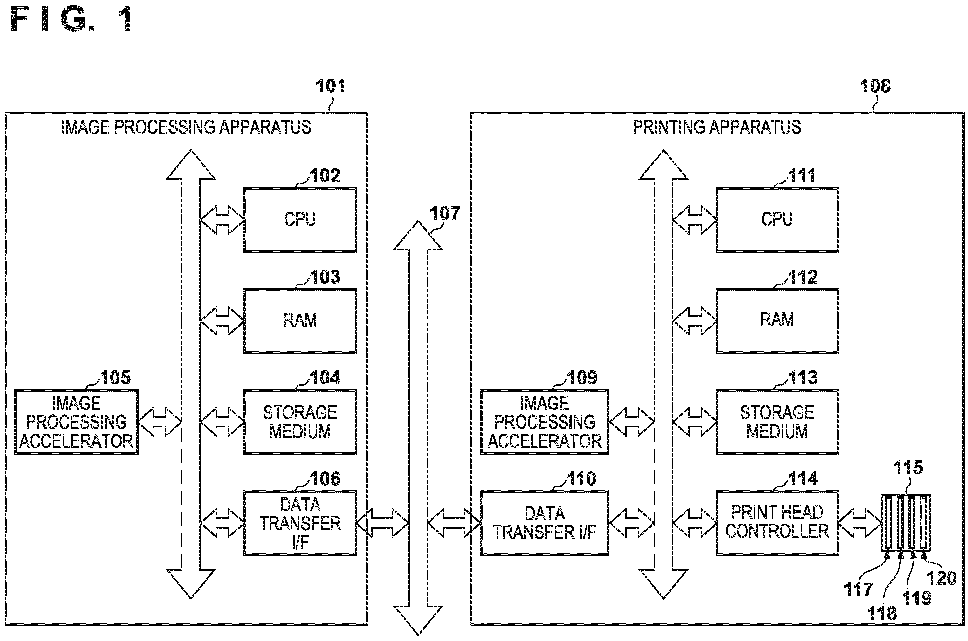

FIG. 1 is a block diagram illustrating a configuration of an image processing apparatus according to the present embodiment. A personal computer (PC), a tablet, a server, or a printing apparatus is used as an image processing apparatus 101. A central processing unit (CPU) 102, which may include one or more processors, circuitry, or combinations thereof, executes various kinds of image processing by reading out a program stored in a storage medium 104, such as a hard disk drive (HDD) or a read only memory (ROM), to a random access memory (RAM) 103, which serves as a work area, and executing the program. For example, the CPU 102 obtains a command from a user via a human interface device (HID) I/F (not illustrated), and then, according to the obtained command and a program stored in the storage medium 104, executes various kinds of image processing. Further, the CPU 102 performs predetermined processing according to a program stored in the storage medium 104 on original data obtained through a data transfer interface (I/F) 106, and then, displays a result thereof and various kinds of information on a display (not illustrated) and transmits them through the data transfer I/F 106. An image processing accelerator 105 is hardware capable of performing image processing faster than the CPU 102. The image processing accelerator 105 is activated by the CPU 102 writing parameters and data used for image processing to a predetermined address of the RAM 103. The image processing accelerator 105 reads the above parameters and data, and then performs image processing on the data. However, the image processing accelerator 105 is not an essential element and equivalent processing may be performed in the CPU 102. The image processing accelerator 105 may be a graphics processing unit (GPU), a specially designed electric circuit, or the like. The above parameters may be stored in the storage medium 104 or may be obtained externally via the data transfer I/F 106.

In a printing apparatus 108, a CPU 111 comprehensively control the printing apparatus 108 by reading out a program stored in a storage medium 113 to a RAM 112, which serves as a work area, and executing the program. An image processing accelerator 109 is hardware capable of performing image processing faster than the CPU 111. The image processing accelerator 109 is activated by the CPU 111 writing parameters and data used for image processing to a predetermined address of the RAM 112. The image processing accelerator 109 reads the above parameters and data, and then performs image processing on the data. However, the image processing accelerator 109 is not an essential element and equivalent processing may be performed in the CPU 111. The above parameters may be stored in the storage medium 113 or may be stored in a storage (not illustrated), such as a flash memory or an HDD.

Here, image processing to be performed by the CPU 111 or the image processing accelerator 109 will be described. The image processing is, for example, processing for generating, based on obtained print data, data indicating positions at which ink dots are to be formed in each scan by a print head 115. The CPU 111 or the image processing accelerator 109 may perform, for example, color conversion processing and quantization processing for obtained print data.

The color conversion processing is processing for separating colors into ink densities handled by the printing apparatus 108. For example, obtained print data includes image data representing an image. When the image data is data representing an image in color space coordinates, such as sRGB which are a color representation for a monitor, the data representing an image in color coordinates (red (R), green (G), and blue (B)) of sRGB is converted into ink data (CMYK), which is handled by the printing apparatus 108. A color conversion method is realized, for example, by matrix calculation processing or processing in which a three-dimensional look-up table (3D LUT) or a four-dimensional (4D) LUT is used.

The printing apparatus 108 according to the present embodiment uses black (K), cyan (C), magenta (M), and yellow (Y) inks as an example. Therefore, RGB signal image data is converted into image data (ink data) constituting of K, C, M, and Y color signals, each with 8 bits. The color signal of each color corresponds to an application amount of each ink. Further, although four colors, K, C, M, and Y, have been given as an example for the number of ink colors, another ink color, such as light cyan (Lc), light magenta (Lm), or gray (Gy) ink, which is low in density, may be used to improve image quality. In that case, ink data corresponding thereto is generated.

After the color conversion processing, quantization processing is performed on the ink data. The quantization processing is processing for reducing the number of levels of tones of the ink data. In the present embodiment, quantization is performed using a dither matrix in which a threshold with which a value of the ink data to be compared is arranged for each pixel. After the quantization processing, finally, binary data indicating whether to form a dot at a respective dot formation position is generated.

After the image processing has been performed, a print head controller 114 transfers the binary data to the print head 115. At the same time, the CPU 111 performs print control so as to operate a carriage motor, which operates the print head 115 via the print head controller 114, and to further operate a conveyance motor, which conveys a print medium. The print head 115 prints an image by scanning over the print medium and, at the same time, discharging ink droplets onto the print medium.

The image processing apparatus 101 and the printing apparatus 108 are connected via a communication line 107. In the present embodiment, a local area network will be described as an example of the communication line 107, but it may be a USB hub, a wireless communication network in which a wireless access point is used, a connection in which a Wi-Fi® direct communication function or the like is used. The print head 115 will be described below as having print nozzle arrays for four colors of color ink, which are cyan (C), magenta (M), yellow (Y), and black (K).

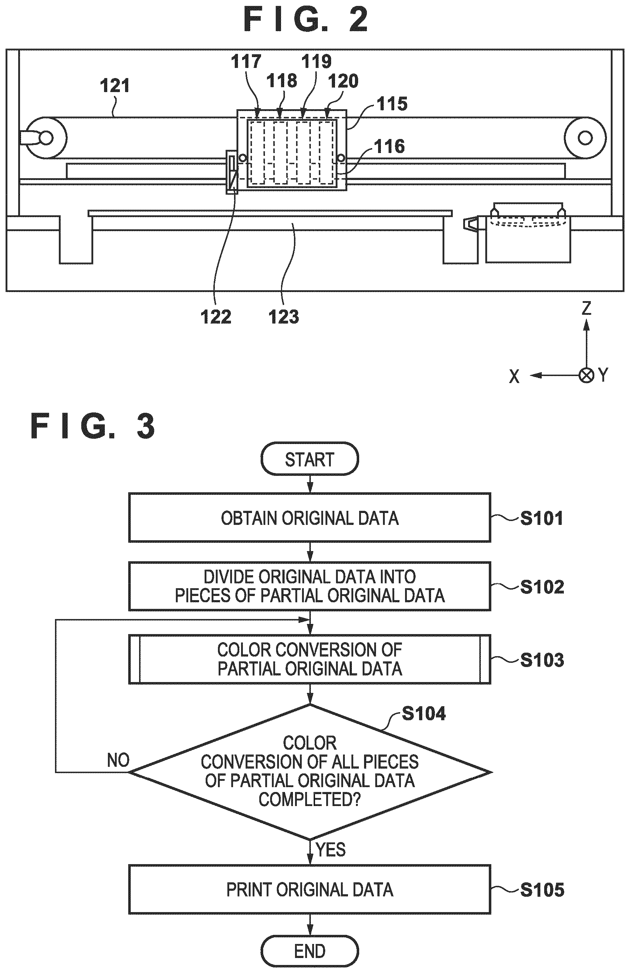

FIG. 2 is a diagram for explaining the print head 115 according to the present embodiment. In the present embodiment, an image is printed by a plurality of scans on a unit region proportional to one nozzle array. The print head 115 includes a carriage 116, nozzle arrays 117, 118, 119, and 120, and an optical sensor 122. The carriage 116 on which the four nozzle arrays 117, 118, 119, and 120 and the optical sensor 122 are mounted can be reciprocated along an X direction (main scanning direction) in the figure by the driving force of the carriage motor transmitted through a belt 121. As the carriage 116 moves in the X direction relative to a print medium, an ink droplet is discharged from each nozzle in the nozzle arrays in a gravitational direction (-Z direction in the figure) based on print data. In the present embodiment, it is assumed that a discharge element that discharges ink droplets from each nozzle is a thermal discharge element that discharges liquid by generating bubbles using an electrothermal conversion element. However, the discharge element is not limited thereto and may use a method in which liquid is discharged using a piezoelectric element (piezo) or another discharge method.

With this, an image proportional to 1/N-th (N: natural number) of a main scan is printed on a print medium mounted on a platen 123. When one main scan is completed, the print medium is conveyed along a conveyance direction (-Y direction in the figure), which intersects the main scanning direction, by a distance corresponding to a width of 1/N-th of a main scan. With these operations, an image is printed by N scans on a region that is a width of one nozzle array. By alternately repeating such a main scan and a conveyance operation, an image is gradually printed on the print medium. With this, it is possible to perform control so as to complete image printing for a predetermined region.

<Print Processing>

FIG. 3 is a flowchart for explaining print processing in the image processing apparatus 101. The processing of FIG. 3 is realized, for example, by the CPU 102 reading out a program to the RAM 103 and executing the program. In the present embodiment, an example in which the print processing is executed by the image processing apparatus 101 will be described, but a configuration may be taken so as to execute it in the printing apparatus 108 or process it by distributing it between the image processing apparatus 101 and the printing apparatus 108.

In step S101, the CPU 102 obtains original data to be printed. Specifically, the CPU 102 obtains the original data from a data transfer interface of a host PC through the data transfer I/F 106 of the image processing apparatus 101. Here, the original data is document data constituted by a plurality of pages.

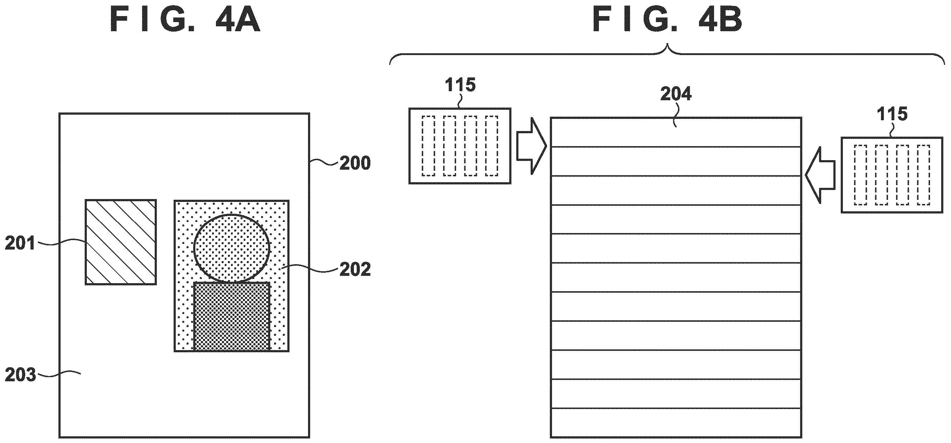

Next, in step S102, the CPU 102 divides the original data into a plurality of pieces of partial original data. In the present embodiment, the original data to be printed is, for example, document data constituted by a plurality of pages. The pieces of partial original data may be in any form so long as they are in units of processing into which the original data has been divided. FIGs. 4A and 4B are diagrams for explaining partial image data. For example, a unit of a page, such as image data 200 illustrated in FIG. 4A, may be assumed as partial original data. FIG. 4B illustrates a printing region on which printing is performed by scanning of the print head 115. A region 204 illustrates an example in which printing is completed by two scans of the print head 115 (arrows indicate scanning directions). A unit of data to be printed by the print head, such as the region 204, may be assumed as partial original data. When the image data of FIG. 4A is described in Page Description Language (PDL), a region 201 or a region 202, which is a unit of a region determined by a drawing command, may be assumed as partial original data. For example, a configuration may be taken so as to combine a plurality of units of regions determined by a page, a band, or a drawing command into one and assume it as partial original data, such that when in units of pages, first and second pages are combined into partial original data. In the present embodiment, an example in which the original data is divided into pieces of partial original data in units of pages will be described.

Next, in step S103, the CPU 102 performs loop processing to be performed on each piece of original data. In step S103, the CPU 102 performs color conversion processing on partial original data. The color conversion processing will be described later in detail.

Next, in step S104, the CPU 102 determines whether color conversion of all pieces of partial original data has been completed. If it is determined that it has been completed, the processing transitions to step S105, and if it is determined that it has not been completed, the color conversion processing of step S103 is performed on the next partial original data. Next, in step S105, the CPU 102 prints the original data. Specifically, four processes, which are ink color separation, output characteristic conversion, quantization, and printing, are performed for each pixel of image data that has been converted in step 5103.

The ink color separation is processing in which Rout, Gout, Bout, which are output values of color conversion processing, are converted into output values of respective ink colors to be printed according to an inkjet printing method. In the present embodiment, printing with four colors of ink, which are cyan, magenta, yellow, and black, for example, is assumed. There are various methods of realizing the conversion, and for example, a three-dimensional look up table (LUT) may be used to calculate an appropriate combination of ink color pixel values (C, M, Y, K) for a combination of output pixel values (Rout, Gout, Bout), as in the color conversion processing. For example, the following three-dimensional LUT 2 [256] [256] [256] [4] is used.

$$C = LUT\ 2\ [Rout]\ [Gout]\ [Bout]\ [0] \ldots (1)$$

$$M = LUT\ 2\ [Rout]\ [Gout]\ [Bout]\ [1] \ldots (2)$$

$$Y = LUT\ 2\ [Rout]\ [Gout]\ [Bout]\ [2] \ldots (3)$$

$$K = LUT\ 2\ [Rout]\ [Gout]\ [Bout]\ [3] \ldots (4)$$

Further, the table size may be reduced, such as the number of grids of the LUT being reduced from 256 grids to, for example, 16 grids or the like, and output values being determined by performing interpolation from table values of a plurality of grids.

Next, output characteristic conversion is processing of converting the density of each ink color into a print dot rate. Specifically, for example, the densities of 256 tones for each color are converted into print dot rates Cout, Mout, Yout, and Kout of 1024 tones for respective colors. To do so, for example, a one-dimensional LUT 3 [4] [256] in which appropriate print dot rates for densities of respective ink colors are set, such as the following, is used.

$$Cout = LUT\ 3\ [0]\ [C] \ldots (5)$$

$$Mout = LUT\ 3\ [1]\ [M] \ldots (6)$$

$$Yout = LUT\ 3\ [2]\ [Y] \ldots (7)$$

$$Kout = LUT\ 3\ [3]\ [K] \ldots (8)$$

Further, the table size may be reduced, such as the number of grids of the LUT being reduced from 256 grids to, for example, 16 grids or the like, and output values being determined by performing interpolation from table values of a plurality of grids.

Next, quantization is processing for converting the print dot rates Cout, Mout, Yout, and Kout for respective ink colors into print dot on/off for each actual pixel. Regarding a method of quantization, various techniques, such as an error diffusion method or a dither method, for example, may be used. For example, quantization may be achieved as in the following equation according to the dither method.

$$Cdot = Halftone\ [Cout]\ [x]\ [y] \ldots (9)$$

$$Mdot = Halftone\ [Mout]\ [x]\ [y] \ldots (10)$$

$$Ydot = Halftone\ [Yout]\ [x]\ [y] \ldots (11)$$

$$Kdot = Halftone\ [Kout]\ [x]\ [y] \ldots (12)$$

Then, by comparison with a threshold corresponding to each pixel position (x, y), print dot on/off for each ink color is realized. For example, assume that Cout, Mout, Yout, and Kout each are expressed in 10 bits and take on a value range from 0 to 1023. Therefore, respective print dot occurrence rates will be Cout/1023, Mout/1023, Yout/1023, Kout/1023. Finally, generated image data is printed.

<Color Conversion Processing>

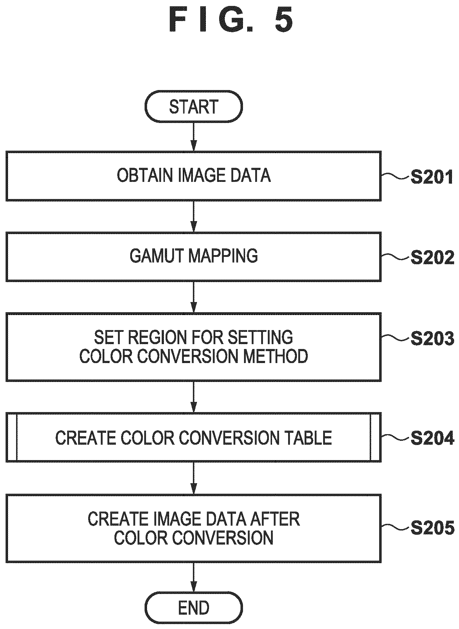

FIG. 5 is a flowchart for explaining color conversion processing of step S103 of FIG. 3 according to the first embodiment. The processing of FIG. 5 is realized, for example, by the CPU 102 reading out a program to the RAM 103 and executing the program. In the present embodiment, an example in which the color conversion processing is executed by the image processing apparatus 101 will be described, but a configuration may be taken so as to execute it in the printing apparatus 108 or process it by distributing it between the image processing apparatus 101 and the printing apparatus 108. In the present embodiment, an example in which a color conversion table according to which color degradation is reduced and colors of original data are made distinguishable (identifiable) even in output of the printing apparatus 108 is created will be described.

In step S201, the CPU 102 obtains image data for color conversion processing. The image data obtained in the present embodiment is partial original data outputted in the above step 5102 and is, for example, image data in a unit of a page. The image data includes color information representing colors defined in a predetermined color space. The color information according to the present embodiment is sRGB data. The color information is not limited thereto and may be any type of data so long as colors can be defined thereby, such as Adobe RGB data, CIE-L*a*b* data, CIE-LUV data, XYZ color system data, xyY color system data, HSV data, and HLS data.

Next, in step S202, the CPU 102 performs color conversion on the image data using a color conversion table stored in advance in the storage medium 104. The color conversion according to the present embodiment is to perform gamut mapping on image data, and the color reproduction gamut of sRGB data is mapped to the color reproduction gamut of the printing apparatus 108. In the printing apparatus 108, the color reproduction gamut is different depending on a printing method, a printing speed, and the like, which are determined for each output mode. Therefore, in the image processing apparatus 101, gamut mapping preferably corresponds to a plurality of output modes. Gamut-mapped image data is stored in the RAM 103 or the storage medium 104. Specifically, the color conversion table is a three-dimensional LUT. A combination of output pixel values (Rout, Gout, Bout) can be calculated for a combination of input pixel values (Rin, Gin, Bin) according to the three-dimensional LUT. If input values Rin, Gin, and Bin each have 256 tones, it is preferable to use a table LUT 1 [256] [256] [256] [3], which has 16,777,216 combinations of output values, which is the product of 256 × 256 × 256. The color conversion is performed using the above gamut mapping table. Specifically, the color conversion can be achieved by executing the following equations on each pixel of an image constituted by RGB pixel values of the image data inputted in step S101.

$$Rout = LUT\ 1\ [Rin]\ [Gin]\ [Bin]\ [0] \ldots (13)$$

$$Gout = LUT\ 1\ [Rin]\ [Gin]\ [Bin]\ [1] \ldots (14)$$

$$Bout = LUT\ 1\ [Rin]\ [Gin]\ [Bin]\ [2] \ldots (15)$$

Further, known contrivances for reducing the table size may be used, such as reducing the number of grids of the LUT from 256 grids to, for example, 16 grids or the like, and determining output values by performing interpolation from table values of a plurality of grids.

Next, in step S203, the CPU 102 sets (region setting), on an image represented by the image data obtained in step S201, a first region, which is used to set a method of converting colors of image data, and a second region, which is not used to set a method of converting colors of the image data. In the present embodiment, setting of a color conversion method is to create a gamut mapping color conversion table. Regarding setting of a color conversion method, a conversion equation may be created or a color conversion table may be created, and any method may be used so long as a method according to which color conversion can be executed can be set.

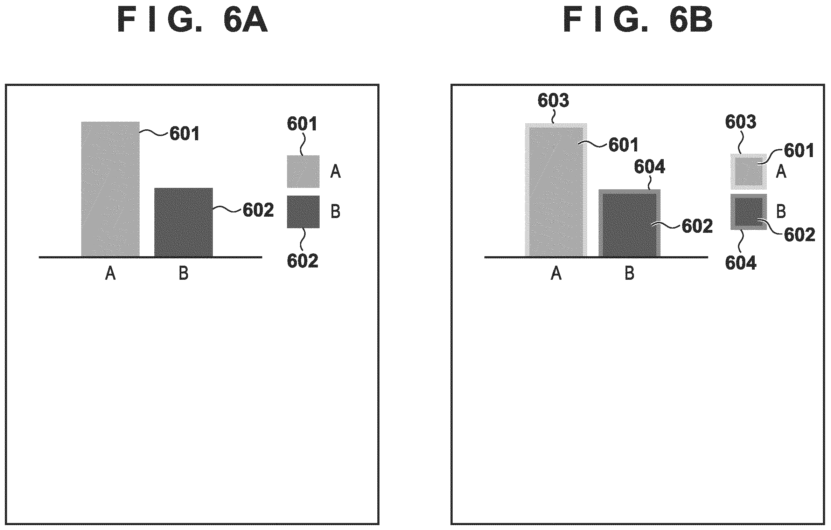

FIGS. 6A and 6B are examples of image data obtained in step S201. FIG. 6A is the original data itself that the user created for input to the image processing apparatus 101. FIG. 6B is an image obtained by converting the resolution of the image data of FIG. 6A to a low resolution by simple thinning and then converting the resolution to the original resolution again by bilinear conversion. In the image processing apparatus 101, due to the capacity limit of the storage medium 104 of the image processing apparatus 101, in some cases, inputted original data is stored in the storage medium 104 after resolution conversion or compression being performed thereon and is expanded at the time of use and used. In FIG. 6A, there are only two colors, which are a color 601 and a color 602 in a bar graph; however, in FIG. 6B, a color 603 and a color 604 occur due to the above resolution conversion, in addition to the color 601 and the color 602. Generally, the color 603, which occurs against the intention of the user when the resolution is converted from a low resolution to the original resolution as described above, is a color that is close to the color 601, and the color 604, which similarly occurs against the intention of the user, is a color close to the color 602.

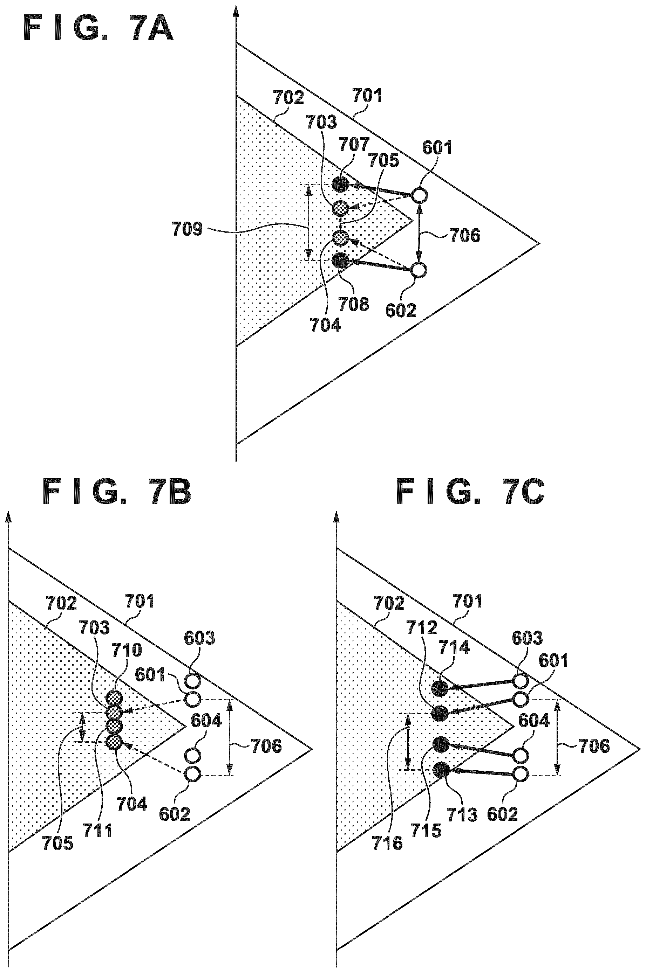

FIGs. 7A to 7C are diagrams for explaining color degradation and correction thereof. FIG. 7A indicates a case where image data before color conversion is that of FIG. 6A, and FIGs. 7B and 7C indicate cases where image data before color conversion is that of FIG. 6B. A color reproduction gamut 701 is a color reproduction gamut of the image data and, in the present embodiment, indicates an sRGB color reproduction gamut. A color reproduction gamut 702 is a color reproduction gamut after color conversion processing of step S205, which will be described later, and corresponds to a color reproduction gamut in a predetermined output mode of the printing apparatus 108.

In FIG. 7A, a color 703 is a color after converting the color 601 by gamut mapping. A color 704 is a color after converting the color 602 by gamut mapping. When a color difference $\Delta E$ 705 between the color 703 and the color 704 is smaller than a color difference $\Delta E$ 706 between the color 601 and the color 602, it is determined that colors have degraded. As a method of calculating a color difference $\Delta E$, a Euclidean distance in a color space is used. In the present embodiment, description will be given using a Euclidean distance (hereinafter, recited as color difference $\Delta E$) in the CIE-L*a*b* color space as an appropriate example. Since the CIE-L*a*b* color space is a visually uniform color space, the Euclidean distance can be approximated to an amount of change in color. Therefore, humans tend to perceive that colors are close when the Euclidean distance in the CIE-L*a*b* color space decreases and perceive that colors are apart when the Euclidean distance increases. The color information in the CIE-L*a*b* color space is represented using a color space with three axes, L*, a*, and b*. An equation for calculating a color difference $\Delta E$ between a color (L1, a1, b1) and a color (L2, a2, b2) is the following equation.

$$\Delta E = \sqrt{(L_1 - L_2)^2 + (a_1 - a_2)^2 + (b_1 - b_2)^2} \quad \ldots (16)$$

Then, in the present embodiment, a color conversion table according to which a distance between the color 703 and the color 704 is increased in a predetermined color space and thus color degradation is corrected is created. Specifically, correction processing for increasing a distance between colors to be greater than or equal to a distance between colors at which the color 703 and the color 704 can be identified as different colors based on characteristics of visual perception of humans is performed. In terms of characteristics of visual perception, a distance between colors at which the colors can be identified as different colors is a color difference $\Delta E$ of 2.0 or more. More preferably, it is desired that a color difference between the color 703 and the color 704 is approximately equal to the color difference $\Delta E$ 706. Therefore, a color conversion table according to which the color 601 and the color 602 are gamut-mapped to a color 707 and a color 708, respectively, is created. As a result, a color difference $\Delta E$ 709, which is equal to the color difference $\Delta E$ 706, can be reproduced in a device color gamut.

Meanwhile, in FIGs. 7B and 7C, a color 710 is a color after converting the color 603 by gamut mapping. A color 711 is a color after converting the color 604 by gamut mapping. Similarly to the above, a color conversion table according to which, when correction for increasing a distance between colors is performed to correct color degradation, the color 601, the color 602, the color 603, and the color 604 are gamut-mapped to a color 712, a color 713, a color 714, and a color 715, respectively, is created. Therefore, although a distance between colors is increased, in some cases, an inter-color distance cannot be increased in a device color gamut such that a color difference $\Delta E$ 716 between the color 712 and the color 713 is 2.0 or more or to the same extent as that of the color difference $\Delta E$ 706. As a result, in some cases, colors that are identifiable in the original data displayed on a monitor end up not being identifiable in a result of output of the printing apparatus 108.

In the present embodiment, instead of setting a color conversion method using the color information of all pixels of image data, a first region, which is used for setting a method of converting colors of input image data, and a second region, which is not used for setting a method of converting colors of input image data, are set, and a color conversion method is set using the color information of the first region. As will be described later, in the present embodiment, a region used for distinguishing colors is set in input image data, and a color conversion table is created so as to be limited to the color information of that region. As a result, even when the image data of FIG. 6B is inputted, the color conversion method of FIG. 7A, which is suitable for distinguishing colors can be set instead of that of FIG. 7C, and it is possible to correct the problem of a color difference ceasing to be identifiable in output of the printing apparatus 108 described above.

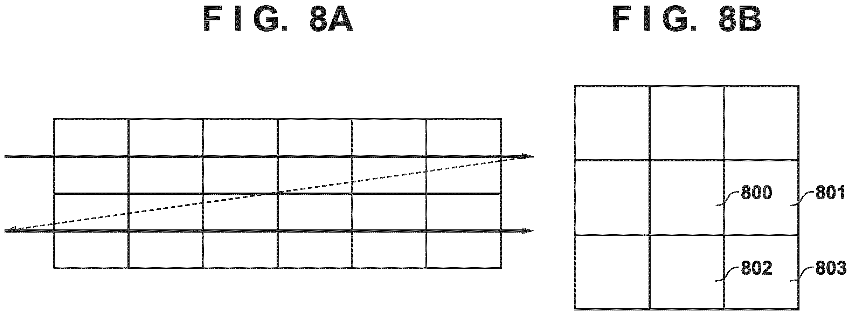

In the present embodiment, color information of image data that can be identified by humans and can be distinguished in output of the printing apparatus 108 is a region having a predetermined surface area or more in a plan view, and that region is set as the first region. Therefore, a region in which a pixel having the same color information continues vertically for two or more pixels and continues horizontally for two or more pixels in image data is set as the first region. FIGs. 8A and 8B are diagrams for explaining setting of the first region according to the present embodiment. As illustrated by arrows in FIG. 8A, in the present embodiment, image data in units of pixels is sequentially processed by line processing. In pixel-based processing, it is determined whether the color information of each of three surrounding pixels (pixel 801, pixel 802, and pixel 803) of a pixel to be processed (pixel of interest) 800 illustrated in FIG. 8B is the same as the color information of the pixel of interest. If a determination result is that they are the same, 4 pixels including the pixel of interest are set as the first region. Pixels that have already been set as the first region may be set again as the first region in the pixel-based processing. In the present embodiment, the first region is set using the above method, but the method is not limited to the above so long as a region that has a predetermined surface area or more in a plan view and in which the color information is the same can be extracted. Further, in the present embodiment, a region in which the color information is the same is extracted, but in lossy compression image data, such as JPEG (Joint Photographic Expert Group), for example, the color information that was the same in the original image data may vary in a predetermined range. Therefore, regarding a region in which the color information is the same, a range in which variation is allowed, such as where a color difference $\Delta E$ is 1.0 or less or a difference in RGB values is within a predetermined value, for example, may be set.

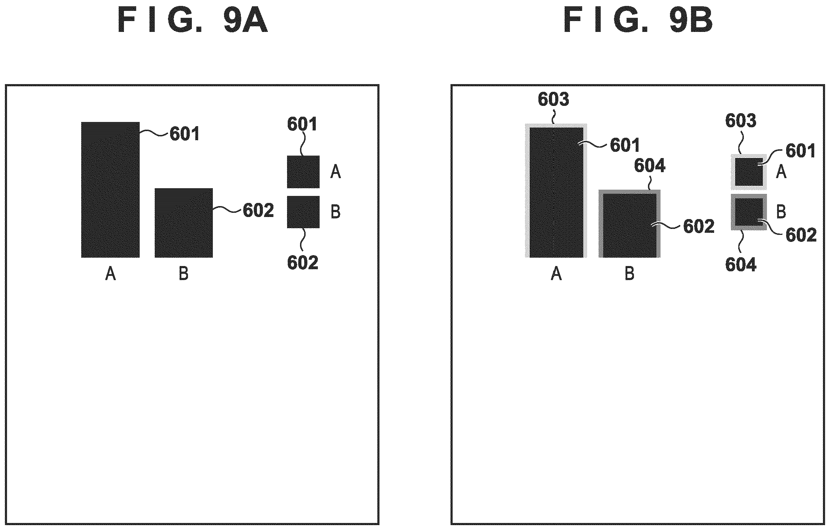

As a result of setting, in the present embodiment, for both of the image data of FIGs. 6A and 6B, regions filled in black in FIGs. 9A and 9B are set as the first region, and a region filled in white is set as the second region. In other words, even if the color 603 and the color 604, which are against the intention of the user, occur, those colors are not taking into account in setting a method of converting colors of input image data.

Next, in step S204, the CPU 102 creates a color conversion table based on the following information.

- image data obtained in step S201
- color conversion table stored in advance in the storage medium 104 and used in step S202
- image data obtained by converting colors in step S202 using the color conversion table stored in advance in the storage medium 104
- region information set in step S203

The format of the color conversion table created in step S204 may be similar to the format of the color conversion table stored in advance in the storage medium 104 and used in step S202. Next, in step S205, the CPU 102 generates image data after color conversion by performing calculation on the image data obtained in step S201 using the color conversion table created in step S204. The generated image data is stored in the RAM 103 or the storage medium 104.

<Setting of Color Conversion Method>

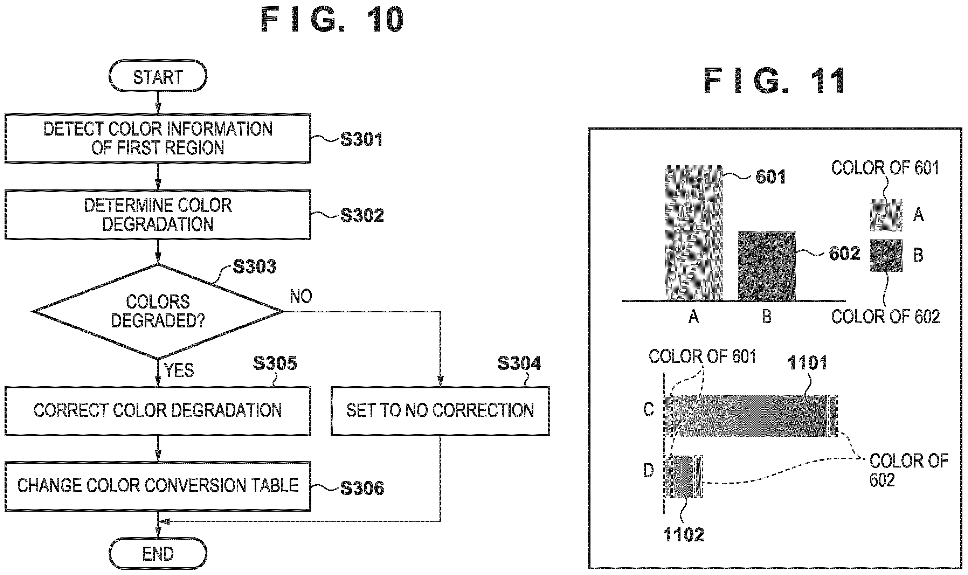

A method of creating a color conversion table of step S204 according to which color degradation is reduced will be described in detail with reference to the flowchart of FIG. 10. The processing of FIG. 10 is realized, for example, by the CPU 102 reading out a program to the RAM 103 and executing the program. In the present embodiment, an example in which the processing for creating a color conversion table is performed by the image processing apparatus 101 will be described, but a configuration may be taken so as to execute it in the printing apparatus 108 or process it by distributing it between the image processing apparatus 101 and the printing apparatus 108.

In step S301, the CPU 102 detects the color information of the first region of FIGs. 9A and 9B set in step S203. The detection processing is repeated for each pixel of the image data of the first region and is performed for all pixels included in the image data of the first region. In the present embodiment, the color 601 and the color 602 of FIG. 6A or 6B are detected. A list of color information is initialized at the beginning of step S301.

In step S302, the CPU 102 detects the number of combinations of colors in which colors have degraded among combinations in the list of color information based on the list of color information detected in step S301. Here, as described in step S203, a combination of the color 601 and the color 602 is detected as degraded.

In step S303, the CPU 102 determines whether the number of combinations of colors in which colors have degraded in step S302 is zero. If it is determined that the number of combinations of colors in which colors have degraded is zero, the processing proceeds to step S304, and it is determined that the image does not need color degradation correction. In such a case, regarding the color conversion table, the color conversion table stored in advance in the storage medium 104 and used in step S202 is set. If it is determined that the number of combinations of colors in which colors have degraded is not zero, the processing proceeds to step S305, and the CPU 102 performs color degradation correction.

Colors change due to color degradation correction. Therefore, a color change will occur even in a combination of colors in which colors have not degraded, resulting in an unnecessary color change. Therefore, a configuration may be taken so as to determine whether color degradation correction is desirable based on the total number of combinations in the list of color information and the number of combinations of colors in which colors have degraded. Specifically, for example, a configuration may be taken so as to determine that color degradation correction is desirable (i.e., determine in step S303 that there be color degradation correction) when the number of combinations of colors in which colors have degraded is the majority of the total number of combinations in the list of color information. By doing so, it is possible to reduce the problem of a color change due to color degradation correction. For example, in FIGs. 6A and 6B, a bar graph with two colors, which are the color 601 and the color 602, is illustrated, but if a bar graph with 10 colors is illustrated, the total number of combinations will be 45. In such a case, a configuration may be taken so as to determine that color degradation correction is desirable when the number of combinations of colors in which colors have degraded is, for example, 23 or more.

In step S305, the CPU 102 performs color degradation correction on the combination of colors in which colors have degraded based on the image data, the image data after color conversion, and the color conversion table. As described in FIGs. 7A to 7C, color degradation correction is performed such that the color difference ΔE 705 between the color 703 and the color 704 will be the color difference ΔE 709 between the color 707 and the color 708, which is approximately equal to the color difference ΔE 706. The processing for correcting color degradation is repeated for the number of combinations of colors in which colors have degraded. Regarding the result of color degradation correction for the number of combinations of colors, the color information before correction and the color information after correction are held in a table. In FIGs. 7A to 7C, color information is color information in the CIE-L*a*b* color space. Therefore, it may be converted into the color spaces of image data at the time of input and image data at the time of output. In such a case, the color information before correction that is in the color space of image data at the time of input and the color information after correction that is in the color space of image data at the time of output are held in a table.

Further, in FIGs. 7A to 7C, correction is performed on a line connecting the color 703 and the color 704 and extending beyond them, but in the present embodiment, it is not limited thereto. The correction may be performed in any direction among a lightness direction, a chroma direction, and a hue angle direction in the CIE-L*a*b* color space so long as the color difference ΔE 709 between the color 707 and the color 708 is a distance proportional to the color difference ΔE 706. Further, not only one direction but a combination of each of a lightness direction, a chroma direction, and a hue angle direction may be taken. Further, in FIGs. 7A to 7C, examples in which both the color 703 and the color 704 are corrected are illustrated, correction may be performed so as to correct only one color and thereby increase the distance to be proportional to the color difference ΔE 706.

In step S306, the CPU 102 changes the color conversion table using a result of degradation correction of step S305. The color conversion table before the change is a table according to which the color 601 and the color 602 of FIGs. 6A and 6B are converted to the color 703 and the color 704, respectively. The table is changed (color conversion method is set) to that according to which the color 601 and the color 602 of FIG. 6A are converted to the color 707 and the color 708, respectively, using the result of step S305. Meanwhile, if it is determined in step S303 that there be no color degradation correction, the processing of step S306 will not be performed. That is, the processing of step S303, can be said to be processing for determining whether to change the color conversion table in step S306. As described above, it is possible to create a color-degradation-corrected table. The change of the color conversion table is repeated for the number of combinations of colors in which colors have degraded.

As illustrated in FIGs. 9A and 9B, in the present embodiment, the color information of image data that can be identified by humans and can be distinguished in output of the printing apparatus 108 is a region having a predetermined surface area or more in a plan view, and the color 601 and the color 602 are set as that region. Therefore, for example, a horizontal line at the bottom of the bar graph of FIG. 6A or FIG. 6B is not detected, but since it is not a target for which color degradation correction is set, the above changed color conversion table that has been created need not be applied. Further, when the image data of step S201 is that of FIG. 6B, the color 603 and the color 604 are not the first region, which is used to generate a color conversion table for correction, but are a region (second region) adjacent to the first region, as illustrated in FIG. 9B. Further, as described above, since the color 603 and the color 604 are colors close to the color 601 and the color 602, the color 603 and the color 604 are also converted using the above changed color conversion table. In other words, it can be said that a region on which the changed color conversion table is applied is a region including at least a portion of the first region and the second region. Thus, by changing a region used to generate a changed color conversion table and a region to which the changed color conversion table that has been generated is applied, it is possible to prevent unnecessary color degradation correction and obtain an optimum output image.

According to the present embodiment, the first region, which is used for setting a method of converting colors of image data, and the second region, which is not used for setting a method of converting colors of image data, are set. By setting each region, it is possible to prevent unnecessary color degradation correction and set an appropriate color conversion method based only on the information of a region (i.e., the first region) desirable for color degradation correction. As a result, it is possible to obtain a color conversion result suitable for the printing apparatus 108 across the entire image.

In the present embodiment, regarding the color information of image data that can be identified by humans and can be distinguished in output of the printing apparatus 108, the first region is set according to a condition that a pixel having the same color information continues vertically for two or more pixels and continues horizontally for two or more pixels, as a region having a predetermined surface area in a plan view. However, the number of pixels continuing vertically and horizontally may be set according to the output resolution of the printing apparatus 108, characteristics of visual perception of a person viewing output of the printing apparatus 108, and the like. As a result, it is possible to set the first region more optimally. Further, a condition for setting the first region may be designated based on the ancillary information of original data and from the user interface (UI) of the printing apparatus 108 by the user who uses the printing apparatus 108. As a result, it is possible to reflect the intention of the user in the condition for setting the first region.

In the present embodiment, the color conversion table stored in advance in the storage medium 104 is used to set a color conversion table, and a color conversion table is created in the same format as that color conversion table. For example, in the color conversion of step S202, instead of using the color conversion table stored in the storage medium 104, conversion may be performed according to a predetermined rule so as to convert colors from the color reproduction gamut of obtained image data to the color reproduction gamut of the printing apparatus 108 in a relative manner. As a result, it is no longer necessary to store a color conversion table in advance in the storage medium 104, and thus, it is possible to reduce storage capacity. Further, in the setting of a color conversion method of step S204, rather than set a color conversion table, the color information before and after color conversion may be set in a 1:1 correspondence (so-called dictionary format) or may be set according to a calculation equation when it can be approximated by a calculation equation. As a result, it is possible to reduce storage capacity for holding a color conversion method more than in a case of a color conversion table.

[Second Embodiment]

A second embodiment will be described below on points different from the first embodiment. In the first embodiment, a configuration in which a color conversion method is set based on information of the first region, which is desirable for color conversion, to perform color conversion appropriate for image data has been described. However, in some cases, when a set color conversion method is applied to image data, a region in which image quality degrades occurs with the set color conversion method.

FIG. 11 is an example of image data obtained in step S201 according to the second embodiment. In the lower portion of the image data of FIG. 11, a region 1101 and a region 1102, which are a horizontal bar graph, are drawn in addition to the image data of FIG. 6A. A horizontal gradation is drawn in both the region 1101 and the region 1102 of the bar graph. To facilitate understanding of the description, pixels of a gradation, in which the left end of the region is the color 601 of FIGs. 6A and 6B and the right end of the region is the color 602 and therebetween the lightness changes continuously between the color 601 and the color 602, are configured.

When the color conversion table stored in advance in the storage medium 104 is applied to the region 1101 of FIG. 11 in step S202 of the first embodiment, a smooth gradation connecting the color 601 and the color 602 of FIG. 6A is outputted from the printing apparatus 108. Meanwhile, when the color conversion table for reducing color degradation created in step S306 of the first embodiment is applied to the region 1101 of FIG. 11, a gradation between the color 707 and the color 708 of FIG. 7A is outputted from the printing apparatus 108. In this case, as illustrated in FIG. 7A, the color reproduction range in which the gradation is reproduced expanded, but since the number of pixels forming the gradation is the same, the color information of each pixel constituting the gradation will be data that is more discrete. Therefore, gaps may occur between the tones of the gradation. Thus, for example, when a color conversion table in which distinguishing of colors is prioritized (i.e., a color conversion table for reducing color degradation) is set, image quality degradation may occur in a region where color continuation (tones) is prioritized.

Therefore, in the present embodiment, an example in which, in order to reduce image quality degradation, a region in which a set color conversion method is applied and a region in which the set color conversion method is not applied are set, and the color conversion method is switched according to the set region will be described.

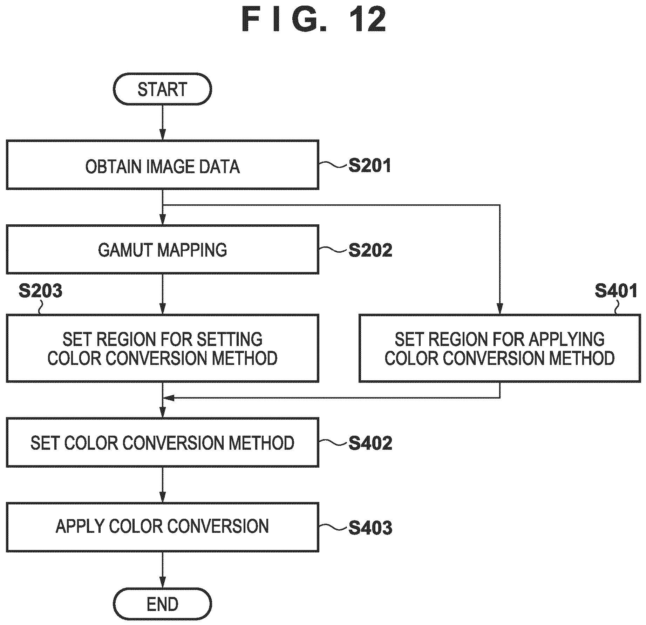

FIG. 12 is a flowchart for explaining color conversion processing of step S103 of FIG. 3 according to the second embodiment. The processing of FIG. 12 is realized, for example, by the CPU 102 reading out a program to the RAM 103 and executing the program. In the present embodiment, an example in which the color conversion processing is executed by the image processing apparatus 101 will be described, but a configuration may be taken so as to execute it in the printing apparatus 108 or process it by distributing it between the image processing apparatus 101 and the printing apparatus 108. Since steps S201 to S203 are similar to those of the first embodiment, description thereof will be omitted. In addition, steps S202 and S203 are executed in parallel to step S401. Furthermore, sequential processing may be performed in the order of steps S201, S401, and S202.

In step S401, the CPU 102 sets a third region to which a color conversion method to be set in subsequent step S402 is applied and a fourth region to which the color conversion method to be set in step S402 is not applied, in the image data obtained in step S201. Here, color tones are prioritized, and so, a region in which a color conversion table in which distinguishing of colors is prioritized is not applied is assumed as the fourth region. That is, a region in which color tones are prioritized is assumed as the fourth region.

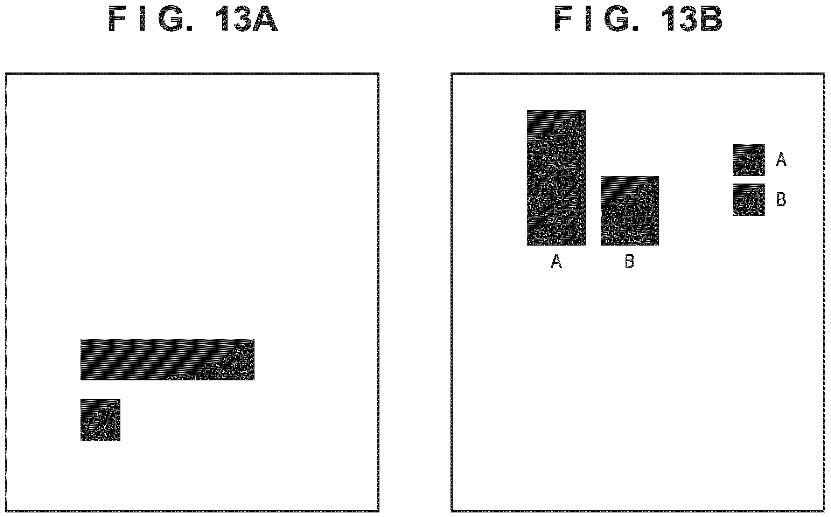

The setting of the fourth region to which the color conversion table, in which distinguishing of colors is prioritized, is not applied so as to prioritize color tones according to the present embodiment will be described with reference to FIGs. 8A and 8B as in the first embodiment. As illustrated by arrows in FIG. 8A, image data in units of pixels is sequentially processed by line processing. In pixel-based processing, it is determined whether the color information of three surrounding pixels (pixel 801, pixel 802, and pixel 803) of a pixel to be processed (pixel of interest) 800 illustrated in FIG. 8B is continuous with the color information of the pixel of interest. In the present embodiment, if the color information of each of the three surrounding pixels of the pixel of interest 800 is not the same as the color information of the pixel of interest 800 and is not separated by a color difference $\Delta E$ of 2.0 or more, the pixel of interest is set as the fourth region. Pixels that have already been set as the fourth region may be set again as the fourth region in the pixel-based processing. In the present embodiment, the fourth region is extracted using the above method, but the method is not limited to that of the above so long as a region in which the color information is continuously changing as image data can be set. For the image data of FIG. 11, regions filled in black illustrated in FIG. 13A are set as the fourth region, and a region filled in white is set as the third region.

FIG. 13B illustrates the first region, which is used to set a method of converting colors of image data set in step S203, and the second region, which is not used to set a method of converting colors of image data set in step S203. In FIG. 13B, the first region is indicated as a region filled in black and the second region is indicated as a region filled in white. As described in the first embodiment, the color 603 and the color 604 are included in the second region. As illustrated in FIGs. 13A and 13B, it is desirable to set a condition for setting the first region and the second region and a condition for setting the third region and the fourth region such that the first region, which is used for setting a color conversion method in which distinguishing of colors is prioritized, is included in the third region to which the color conversion method in which distinguishing of colors is prioritized can be applied. That is, it is desirable to set a region that is used to set a color conversion method in which distinguishing of colors is prioritized not to be a region to which the color conversion method in which distinguishing of colors is prioritized is not applied.

Next, in step S402, the CPU 102 creates color conversion tables for the third region and the fourth region set in step S401. Description will be omitted for the color conversion table for the third region as it is similar to that of the first embodiment. Regarding the color conversion table for the fourth region, a color conversion table, in which tones are prioritized and which is stored in advance in the storage medium 104 but is different from the color conversion table stored in advance in the storage medium 104 and used in step S202, is set. The color conversion table in which tones are prioritized is different from the color conversion table that can be applied to the third region.

Next, in step S403, the CPU 102 executes color conversion based on the following information.

- region information of step S401
- color conversion table for the third region set in step S402
- color conversion table for the fourth region in which tonality is prioritized and which is stored in advance in the storage medium 104 and set in step S402

Regarding the image data obtained in step S201, for the third region set in step S402, image data after color conversion is generated by performing calculation using the color conversion table for the third region extracted in step S401. Meanwhile, for the fourth region extracted in step S401, image data after color conversion is generated by performing calculation using the color conversion table in which tonality is prioritized and which is stored in advance in the storage medium 104 and set in step S402. The generated image data is stored in the RAM 103 or the storage medium 104.

According to the present embodiment, by setting the first region, which is used for setting a method of converting colors of image data, and the second region, which is not used for setting a method of converting colors of image data, it is possible to set an appropriate color conversion method based on information of a region used for color conversion. In addition, the third region to which the color conversion method is applied and the fourth region to which the color conversion method is not applied are set, the setting being different from that for the region for setting the color conversion method. With this, it is possible to execute color conversion only for a region in which image quality does not degrade even when the set color conversion method is applied.

In the present embodiment, an example in which a region in which image quality degrades when a color conversion method generated based on the first region is applied to image data is set as the fourth region, and the color conversion method generated based on the first region is not applied to the fourth region, thereby avoiding image quality degradation has been described. However, the third region and the fourth region may be separated by setting the third region in which image quality degradation does not occur even when the color conversion method generated based on the first region is applied to image data.

In the present embodiment, a color conversion table in which tonality is prioritized and which is stored in advance in the storage medium 104 is applied to the fourth region; however, if a color conversion table stored in advance in the storage medium 104 and used in step S202 of the first embodiment can be applied, any configuration that applies such as table may be taken.

As above, description has been given with reference to each of the embodiments, but the present invention is not limited to the scope described in the above embodiments. It will be obvious to those skilled in the art that various modifications or improvements may be made to the above embodiments. Embodiments obtained by making such modifications or improvements may also be included in the technical scope of the invention.

In each of the embodiments, an example in which a color conversion table according to which colors in the original data are made distinguishable in the output by reducing color degradation is set based on the color information of the first region has been described. When a color conversion method in which distinguishing of colors is prioritized is set, image quality degradation may occur in a region in which tonality is prioritized. Therefore, an example in which a region in which tonality is prioritized is extracted as the fourth region has been described. However, the present invention is not limited thereto. For example, when the color reproduction gamut of the printing apparatus 108 is narrow and the color reproduction gamut of the obtained image data is wide, continuous tones of a high chroma portion of the image data may decrease in tonality due to being mapped to the color reproduction gamut boundary of the color reproduction gamut of the printing apparatus 108. Therefore, a region in which tonality is prioritized may be set as the first region. Then, a color conversion table in which tones are prioritized may be created based on the color information of the first region. Then, when the color conversion table in which tones are prioritized is created, if the color conversion table is applied to a region in which distinguishing of colors is prioritized, image quality degradation may occur. Therefore, a region in which distinguishing of colors is prioritized may be set as the fourth region. As a result, it is possible to set a color conversion table in which tones are prioritized and which has been generated based on a tone region and apply that color conversion table to a region in which image quality degradation does not occur even if the color conversion table in which tones are prioritized is applied. In other words, when the operations of the above embodiments are applied with a region in which tonality is prioritized being set as the first region and a region in which distinguishing of colors is prioritized being set as the fourth region, it is possible to prevent a color conversion table in which tones are prioritized from being applied to the region in which distinguishing of colors is prioritized. Further, a configuration may be taken so as to, instead of the above region in which distinguishing of colors is prioritized, set a region in which chroma is prioritized and apply the operations of the above embodiments. With this, it is possible to generate a color conversion table in which chroma is prioritized based on a region in which chroma is prioritized and apply that color conversion table to a region in which image quality degradation does not occur even if the color conversion table in which chroma is prioritized is applied.

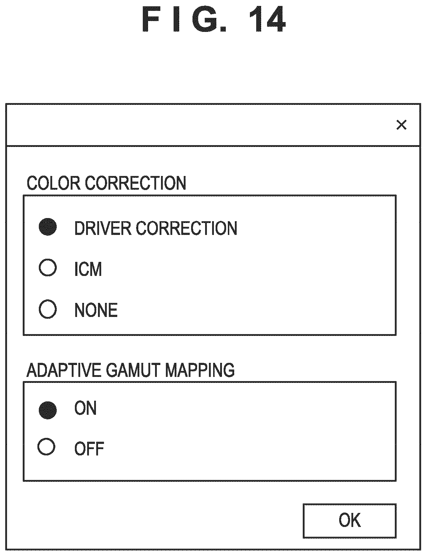

In each of the embodiments, an instruction as to whether to execute color degradation correction may be inputted from the user. In such a case, a configuration may be taken so as to display a UI screen such as that of FIG. 14 on a display unit (not illustrated) mounted on the image processing apparatus 101 or the printing apparatus 108 and allow acceptance of a user instruction. In the UI screen illustrated in FIG. 14, the user can select the type of color correction using a toggle button. Furthermore, on and off as to whether to perform "adaptive gamut mapping" indicating the processing described in the each of the embodiments can be selected by a toggle button. With such a configuration, it is possible to switch whether to perform adaptive gamut mapping according to an instruction of the user. As a result, it is possible to execute gamut mapping described in each of the embodiments when the user wishes to reduce the extent of color degradation.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU), or the like) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An image processing apparatus (101) comprising:
   region setting means configured to set, in an image representing inputted image data, a first region, which is used to set a color conversion method for image data, and a second region, which is not used to set the color conversion method;
   color conversion method setting means configured to:

   as a result of setting by the region setting means, in a case where the first region and the second region are included in the image,
   set the color conversion method based on image data of the first region set by the region setting means; and

   generation means configured to determine the color conversion method set by the color conversion method setting means as a color conversion method to be applied to a region including a portion of at least the first region and the second region in the image, and generate image data after color conversion using the determined color conversion method.

2. The image processing apparatus (101) according to claim 1, further comprising:
   second region setting means configured to set, in the image, a third region to which the color conversion method set by the color conversion method setting means is applied and a fourth region to which the color conversion method is not applied,
   wherein as a result of setting by the second region setting means, in a case where the third region is included in the image,
   the generation means determines the color conversion method set by the color conversion method setting means as a color conversion method to be applied to the third region set by the second region setting means, and generates image data after color conversion using the determined color conversion method.

3. The image processing apparatus (101) according to claim 2, wherein

   as a result of setting by the second region setting means, in a case where the fourth region is included in the image, the generation means determines a color conversion method different from the color conversion method set by the color conversion method setting means as a color conversion method to be applied to the fourth region set by the second region setting means.

4. The image processing apparatus (101) according to claim 3, wherein
   the color conversion method set by the color conversion method setting means is not determined as the color conversion method to be applied to the fourth region.

5. The image processing apparatus (101) according to claim 3, further comprising:

   second color conversion method setting means configured to set a second color conversion method based on image data of the fourth region,
   wherein the generation means determines the second color conversion method set by the second color conversion method setting means as the color conversion method to be applied to the fourth region, and generates image data after color conversion using the determined second color conversion method.

6. The image processing apparatus (101) according to claim 2, wherein
   the fourth region is a region in which a tone changes in a continuous manner.

7. The image processing apparatus (101) according to claim 2, wherein
   the first region is included in the third region.

8. The image processing apparatus (101) according to claim 2, wherein
   the first region and the fourth region are regions different from each other.

9. The image processing apparatus (101) according to claim 2, wherein
   the second region is a region adjacent to the first region.

**10.** The image processing apparatus (101) according to claim 1, wherein

the inputted image data is image data for which a resolution has been converted into a low resolution and thereafter the resolution has been converted into an original resolution, and

the second region includes a region that has been generated due to the resolution being converted into the original resolution.

**11.** The image processing apparatus (101) according to claim 1, wherein
the color conversion method set by the color conversion method setting means is a color conversion method obtained by correcting a third color conversion method of converting a color gamut of the inputted image data to a color gamut of a printing apparatus, so as to increase a distance between colors that has decreased as a result of color conversion being performed by the third color conversion method being applied to the first region.

**12.** The image processing apparatus (101) according to claim 11, wherein
the color conversion method set by the color conversion method setting means is a color conversion method that has been corrected so as to increase, in at least one of a lightness direction, a chroma direction, and a hue angle direction, the distance between colors that has decreased as a result of color conversion being performed by the third color conversion method being applied to the first region.

**13.** The image processing apparatus (101) according to claim 11, wherein
the printing apparatus is a printing apparatus configured to form an image on a print medium according to an inkjet printing method.

**14.** The image processing apparatus (101) according to claim 11, further comprising:

determination means configured to determine whether to perform setting of the color conversion method by the color conversion method setting means,
wherein the color conversion method setting means, in a case where it is determined by the determination means that setting of the color conversion method by the color conversion method setting means be performed, set the color conversion method based on the image data of the first region.

**15.** The image processing apparatus (101) according to claim 14, wherein
the determination means determines whether to perform setting of the color conversion method by the color conversion method setting means based on whether a distance between colors has decreased as a result of color conversion being performed by the third color conversion method being applied to the first region.

**16.** The image processing apparatus (101) according to claim 15, wherein
the determination means, in a case where a distance between colors has decreased for a predetermined number of combinations among a plurality of colors represented by the image data of the first region, determines that setting of the color conversion method by the color conversion method setting means be performed.

**17.** The image processing apparatus (101) according to claim 1, wherein
the color conversion method is a color conversion table.

**18.** The image processing apparatus (101) according to claim 1, further comprising:

input means configured to input image data,
wherein the inputted image data is the image data inputted by the input means.

**19.** The image processing apparatus (101) according to claim 1, further comprising
output means configured to output the image data generated by the generation means.

**20.** A method comprising:

setting, in an image representing inputted image data, a first region, which is used to set a color conversion method for image data, and a second region, which is not used to set the color conversion method;
as a result of the setting, in a case where the first region and the second region are included in the image, setting the color conversion method based on image data of the set first region; and

determining the color conversion method set as a color conversion method to be applied to a region including a portion of at least the first region and the second region in the image, and generating image data after color conversion using the determined color conversion method.

21. A program including instructions, which when executed by one or more processors of an image processing apparatus (101), cause the image processing apparatus (101) to:

setting, in an image representing inputted image data, a first region, which is used to set a color conversion method for image data, and a second region, which is not used to set the color conversion method;

as a result of the setting, in a case where the first region and the second region are included in the image, setting the color conversion method based on image data of the set first region; and

determining the color conversion method set as a color conversion method to be applied to a region including a portion of at least the first region and the second region in the image, and generating image data after color conversion using the determined color conversion method.

22. A non-transitory computer-readable storage medium that stores one or more programs including instructions, which when executed by one or more processors of an image processing apparatus (101), cause the image processing apparatus (101) to:

setting, in an image representing inputted image data, a first region, which is used to set a color conversion method for image data, and a second region, which is not used to set the color conversion method;

as a result of the setting, in a case where the first region and the second region are included in the image, setting the color conversion method based on image data of the set first region; and

determining the color conversion method set as a color conversion method to be applied to a region including a portion of at least the first region and the second region in the image, and generating image data after color conversion using the determined color conversion method.

EP 4 580 172 A1

# F I G. 2

# F I G. 3

```
        ( START )
           │
           ▼
┌──────────────────────────────┐
│    OBTAIN ORIGINAL DATA       │───S101
└──────────────────────────────┘
           │
           ▼
┌──────────────────────────────┐
│    DIVIDE ORIGINAL DATA INTO  │───S102
│  PIECES OF PARTIAL ORIGINAL DATA│
└──────────────────────────────┘
           │
           ▼
┌──────────────────────────────┐
│     COLOR CONVERSION OF       │───S103
│    PARTIAL ORIGINAL DATA      │
└──────────────────────────────┘
           │
           ▼
        S104
        ╱COLOR╲
  NO  ╱CONVERSION OF ALL PIECES╲
 ◄───╱ OF PARTIAL ORIGINAL DATA ╲
     ╲      COMPLETED?         ╱
        ╲                  ╱
           │ YES
           ▼
┌──────────────────────────────┐
│     PRINT ORIGINAL DATA       │───S105
└──────────────────────────────┘
           │
           ▼
         ( END )
```

F I G. 4A

F I G. 4B

# F I G. 5

```
        ┌─────────┐
        │  START  │
        └─────────┘
             │
             ▼
┌───────────────────────────────┐
│      OBTAIN IMAGE DATA         │──S201
└───────────────────────────────┘
             │
             ▼
┌───────────────────────────────┐
│        GAMUT MAPPING           │──S202
└───────────────────────────────┘
             │
             ▼
┌───────────────────────────────┐
│     SET REGION FOR SETTING     │──S203
│     COLOR CONVERSION METHOD    │
└───────────────────────────────┘
             │
             ▼
┌───────────────────────────────┐
│  CREATE COLOR CONVERSION TABLE │──S204
└───────────────────────────────┘
             │
             ▼
┌───────────────────────────────┐
│    CREATE IMAGE DATA AFTER     │──S205
│       COLOR CONVERSION         │
└───────────────────────────────┘
             │
             ▼
        ┌─────────┐
        │   END   │
        └─────────┘
```

EP 4 580 172 A1

# F I G. 7A

# F I G. 7B

# F I G. 7C

F I G. 8A

F I G. 8B

F I G. 9A

F I G. 9B

EP 4 580 172 A1

# FIG. 10

```
        ┌─────────┐
        │  START  │
        └────┬────┘
             ▼
  ┌────────────────────────┐
  │ DETECT COLOR INFORMATION│──── S301
  │    OF FIRST REGION      │
  └───────────┬────────────┘
              ▼
  ┌────────────────────────┐
  │   DETERMINE COLOR       │──── S302
  │     DEGRADATION         │
  └───────────┬────────────┘
              ▼
          S303
         ╱╲
       ╱    ╲
     ╱ COLORS ╲    NO
    ◄ DEGRADED? ►─────────────┐
     ╲        ╱               │
       ╲    ╱                 │
         ╲╱                   │
         │ YES                │
   S305  ▼                    ▼  S304
  ┌──────────────────┐  ┌──────────────────┐
  │ CORRECT COLOR    │  │ SET TO NO        │
  │ DEGRADATION      │  │ CORRECTION       │
  └────────┬─────────┘  └────────┬─────────┘
           ▼                     │
  ┌────────────────────────┐     │
  │ CHANGE COLOR CONVERSION │─S306│
  │        TABLE            │     │
  └───────────┬────────────┘     │
              ▼                   │
              ◄───────────────────┘
        ┌─────────┐
        │   END   │
        └─────────┘
```

# FIG. 11

EP 4 580 172 A1

# FIG. 12

```
            ┌─────────┐
            │  START  │
            └─────────┘
                 │
                 ▼
    ┌──────────────────────────┐
    │    OBTAIN IMAGE DATA      │───S201
    └──────────────────────────┘
                 │
                 ▼
    ┌──────────────────────────┐
    │     GAMUT MAPPING         │───S202
    └──────────────────────────┘

S203                                              S401
    ┌──────────────────────────┐      ┌──────────────────────────┐
    │   SET REGION FOR SETTING  │      │   SET REGION FOR APPLYING │
    │  COLOR CONVERSION METHOD  │      │  COLOR CONVERSION METHOD  │
    └──────────────────────────┘      └──────────────────────────┘
                 │
                 ▼
    ┌──────────────────────────┐
    │  SET COLOR CONVERSION METHOD │───S402
    └──────────────────────────┘
                 │
                 ▼
    ┌──────────────────────────┐
    │   APPLY COLOR CONVERSION  │───S403
    └──────────────────────────┘
                 │
                 ▼
            ┌─────────┐
            │   END   │
            └─────────┘
```

# F I G. 13A

# F I G. 13B

EP 4 580 172 A1

# F I G. 14

COLOR CORRECTION

● DRIVER CORRECTION

○ ICM

○ NONE

ADAPTIVE GAMUT MAPPING

● ON

○ OFF

OK

Europäisches
Patentamt

European
Patent Office

Office européen
des brevets

# EUROPEAN SEARCH REPORT

**Application Number**

EP 24 22 0421

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/129669 A1 (IMAI TOSHIE [JP]) 21 May 2009 (2009-05-21) | 1,13-22 | INV. H04N1/60 |
| Y | * paragraphs [0024] - [0044] * | 2-9,11, 12 | |
| A | | 10 | |
| | - - - - - | | |
| Y | US 2023/124689 A1 (YAMADA AKITOSHI [JP] ET AL) 20 April 2023 (2023-04-20) * paragraphs [0026] - [0119] * | 11,12 | |
| | - - - - - | | |
| Y | US 2006/066925 A1 (HASEGAWA NORIKO [JP] ET AL) 30 March 2006 (2006-03-30) * paragraphs [0051] - [0122] * | 2-9 | |
| | - - - - - | | |

**TECHNICAL FIELDS
SEARCHED      (IPC)**

H04N

The present search report has been drawn up for all claims

| Place of search | Date of completion of the search | Examiner |
|---|---|---|
| The Hague | 16 April 2025 | Hardell, Alexander |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

....................................................................................

& : member of the same patent family, corresponding
    document

EPO FORM 1503 03.82 (P04C01)

## EP 4 580 172 A1

### ANNEX TO THE EUROPEAN SEARCH REPORT
### ON EUROPEAN PATENT APPLICATION NO.

EP 24 22 0421

This annex lists the patent family members relating to the patent documents cited in the above-mentioned European search report.
The members are as contained in the European Patent Office EDP file on
The European Patent Office is in no way liable for these particulars which are merely given for the purpose of information.

16-04-2025

| Patent document cited in search report | | Publication date | Patent family member(s) | | Publication date |
|---|---|---|---|---|---|
| US 2009129669 | A1 | 21-05-2009 | JP | 4374901 B2 | 02-12-2009 |
| | | | JP | 2004341889 A | 02-12-2004 |
| | | | US | 2005036033 A1 | 17-02-2005 |
| | | | US | 2009129669 A1 | 21-05-2009 |
| US 2023124689 | A1 | 20-04-2023 | CN | 115996268 A | 21-04-2023 |
| | | | EP | 4167556 A2 | 19-04-2023 |
| | | | JP | 2024123098 A | 10-09-2024 |
| | | | KR | 20230055361 A | 25-04-2023 |
| | | | US | 2023124689 A1 | 20-04-2023 |
| | | | US | 2024214506 A1 | 27-06-2024 |
| US 2006066925 | A1 | 30-03-2006 | JP | 2006094297 A | 06-04-2006 |
| | | | US | 2006066925 A1 | 30-03-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023060805 A